# EUROPEAN PATENT SPECIFICATION

(11) **EP 3 784 531 B1**
(45) Date of publication and mention of the grant of the patent: **14.08.2024**
(21) Application number: 18916230.8
(22) Date of filing: 07.12.2018
(51) Int. Cl.: B60R 19/52, B60K 11/08

(54) **BLADE LINKAGE STRUCTURE FOR BUMPER GRILLE**
BLATTANORDNUNGSSTRUKTUR FÜR EIN STOSSFÄNGERGITTER
STRUCTURE DE LIAISON DE LAME POUR GRILLE DE PARE-CHOCS

(30) Priority: 23.04.2018 CN 201820581778 U
(43) Date of publication of application: 03.03.2021
(73) Proprietor: Yanfeng Plastic Omnium Automotive Exterior Systems Co., Ltd., Shanghai 201805 (CN); OPmobility SE, 69007 Lyon (FR)
(72) Inventor: XU, Jie, Shanghai 201805 (CN); ZHANG, Chen, Shanghai 201805 (CN); GUI, Xiaogang, Shanghai 201805 (CN)
(74) Representative: LLR
(86) International application number: PCT/CN2018/119739
(87) International publication number: WO 2019/205650

(56) References cited:
- WO-A1-2018/029655
- CN-A- 106 218 568
- CN-A- 106 255 609
- CN-A- 106 715 176
- CN-A- 107 757 348
- CN-U- 204 123 952
- CN-U- 204 123 952
- CN-U- 206 589 833
- CN-U- 208 085 651
- DE-A1- 102018 208 747
- US-A- 4 834 436
- US-A1- 2014 295 749
- US-B2- 9 902 256

## Description

### Field of the Invention

The invention belongs to the technical field of automobile parts, and relates to a blade linkage structure for a bumper grille.

### Background of the Invention

As is well known, when a car moves at a high speed, the torque required for controlling an air-inlet grille is very large. Therefore, it appears very necessary to efficiently transmit an effective torque and reduce the torque required for rotating the blades. The torque required for controlling an air-inlet grille is always provided by an actuator. To ensure the efficient functioning of the actuator, not only is it necessary to transmit the torque delivered by the actuator efficiently, but also it is necessary to reduce the loss of torque due to friction when the blades rotate.

However, currently, the linkage rod in an active grille shutter is of a single-sided connection. As rotation requires the existence of a gap, a single-sided connection is susceptible of creating problems such as loosening, tilting of blades relative to the horizontal, and abnormal noises. In addition, the connection between the linkage rod and the blades is a surface-to-surface contact. When the car moves at a high speed, wind resistance on the blades is very high. If the connection between the linkage rod and the blades is a surface-to-surface contact, the friction produced during movement will be very large. As the actuator must overcome the torque charge created by the wind resistance and the friction, this will create a huge load on the actuator. In other words, in order to control the movement of the active grille shutter, the actuator must overcome not only the torque created by the friction, but also the torque created by the wind resistance.

The document CN204123952U discloses a AGS assembly which comprises an AGS main frame, a left set of blades 1, a right set of blades 3, a left linkage rod 2, a right linkage rod 4, an intermediate linkage rod 5 and an actuator 6.

The document US9902256.B2 discloses a vehicular shutter device including: a frame portion; a fin main body that is pivotably supported inside the frame portion to be pivotable around a pivot shaft portion; and a driving mechanism that pivots the fin main body between a fully open state and a fully closed state.

The document WO2018029655.A1 discloses an active grille shutter arrangement having an assembled modular frame with a plurality of primary frame pieces formed by extrusion.

The document US20140295749.A1 discloses a variable duct apparatus for a vehicle including first and second louvers to rotate around first and second axes to open and closed positions.

### Summary of the Invention

In order to overcome the drawbacks of the prior art, the invention provides a blade linkage structure for a bumper grille, so that the blades are firmly connected and not susceptible of tilting. In addition, the contact form between the linkage rod and the blades is changed, so that the friction coefficient between them and therefore the torque created by the friction are reduced.

The invention provides a bumper grille including blades and a blade linkage structure, the blade linkage structure comprising a linkage rod, a set of pin connection units being provided on the linkage rod, the pin connection units being configured to engage with the blades of the bumper grille, characterized in that, the pin connection units are alternatively arranged on both sides of the linkage rod along the longitudinal direction of the linkage rod such that the pin connection units have opposite insertion directions with adjacent blades.

The pin connection unit comprises a pin, and the blade of the bumper grille is provided with a pin orifice, the pin and the pin orifice engaging with each other by insertion fit.

Preferably, the pin connection units are alternatively distributed on both sides of the linkage rod in a staggered arrangement along the longitudinal direction of the linkage rod.

The pin connection unit is provided with a convex ring at the bottom surrounding the pin.

In addition, the blade of the bumper grille can also be provided with a convex ring on the contacting plane with the pin connection unit.

The invention provides the staggered arrangement of the pin connection units in connection with the blades, so as to control precisely the blades' movement along the Y direction, thereby ensuring stable rotation, improving the parallelism between the blades, and reducing loosening. In addition, by providing the convex rings on the contact plane between the linkage rod and the blades, the line-to-surface contact, instead of the surface-to-surface contact, is formed between the linkage rod and the blades, so that frictions between them are reduced, and the load created by frictions on the actuator is accordingly reduced.

### Description of the Drawings

Figure 1 is a schematic view in perspective of a blade linkage structure for a bumper grille of the invention;
Figure 2 is a schematic view of the structure of the invention, at a first side;
Figure 3 is a schematic view of the structure of Figure 2, at the opposite side;
Figure 4 is an exploded schematic view of the connection between the blade linkage structure of the invention and the blade;
Figure 5 is a sectional view along A-A in Figure 4;
Figure 6 is a schematic view of the invention in use; and
Figure 7 is a schematic view of the structure corresponding to Figure 6, at the opposite side.

### Detailed Description of the Invention

The invention is further described below in reference to the accompanying drawings and embodiments.

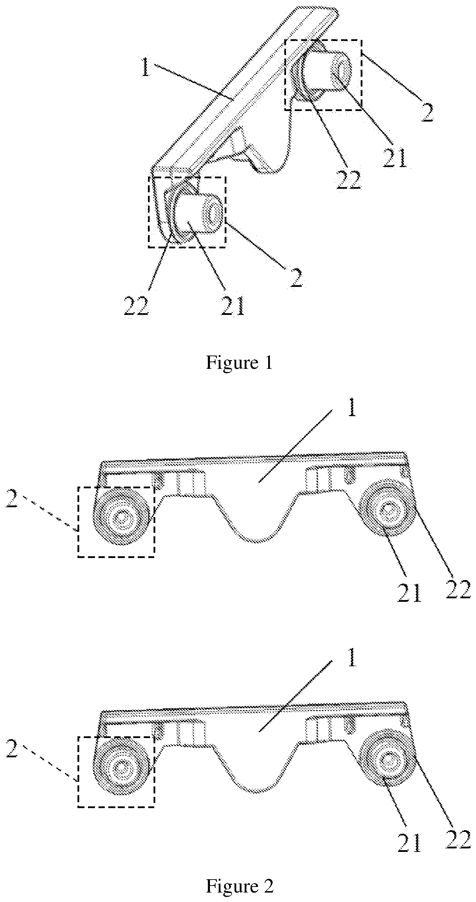

In reference to Figures 1 to 3, which show a preferred embodiment of the invention, a blade linkage structure comprises a linkage rod 1 provided with a number of pin connection units 2 for connecting with blades on a bumper grille. In the present example, the pin connection units 2 are in a group of three. Two adjacent pin connection units 2 are arranged respectively on a different side of the two opposite sides of the linkage rod 1, i.e., in an alternate staggered arrangement along the longitudinal direction of the linkage rod 1. Each pin connection unit 2 comprises a pin 21 that engages with a blade by insertion fit and a convex ring 22 that surrounds the bottom of the pin 21.

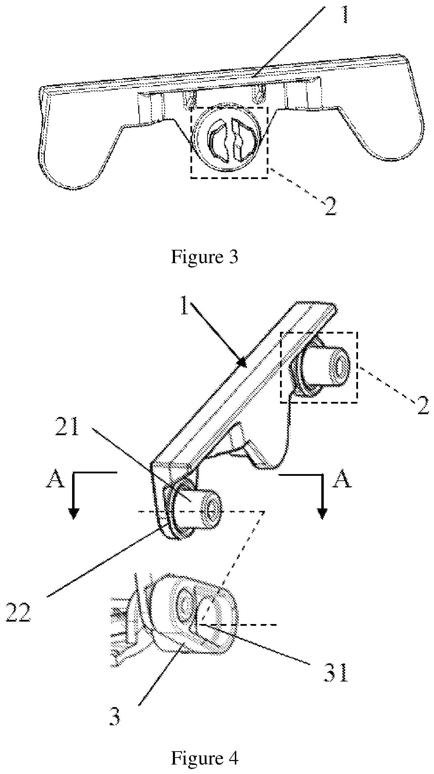

As shown in Fig. 4, which is a schematic view of the cooperation between the blades of a bumper grille and the above-described linkage structure, the blade 3 of the bumper grille is provided with a pin orifice 31. The pin orifice 31 engages with the pin 21 of the pin connection unit 2 by muff-coupling. Thanks to the alternate staggered arrangement of the pin connection units 2, the insertion directions of pins 21 into adjacent blades 3 are opposite between them. In other words, the insertion directions of the first and third blades with the linkage rod are opposite to the insertion direction of the second blade, so as to form a back-to-back connection. As a result, the forces of the blades on the linkage rod are in the opposite directions, such that the linkage rod is always connected with the blades without loosening and always drives the blades to rotate with improved parallelism between the blades.

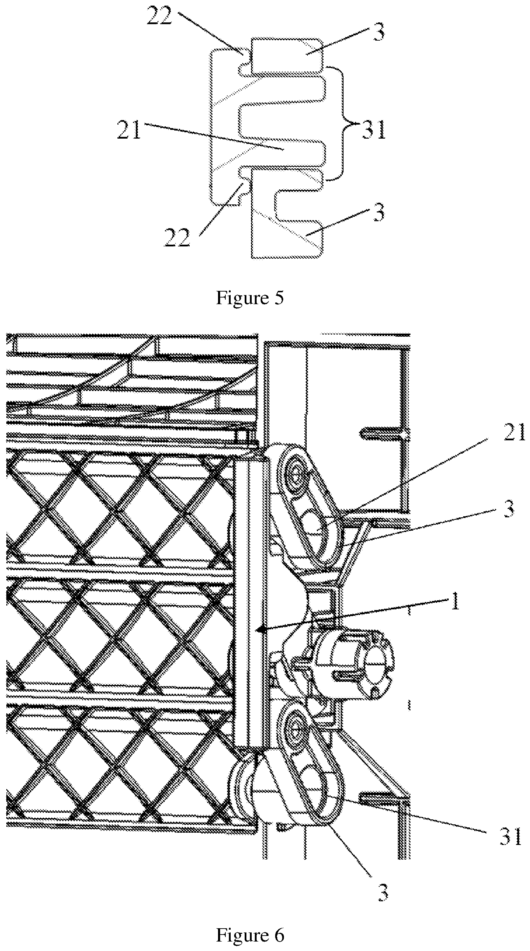

Further, in reference to Fig.5, which is a longitudinal section view of the assembly between the blade 3 and the linkage rod 1, it can be seen that, as the pin connection unit 2 is provided with a convex ring 22 at the bottom of the pin 21, once the blade 3 and the pin 21 are assembled by muff-coupling, the contact between the two at the bottom forms a line-to-surface contact, which significantly reduces the friction coefficient when compared to the surface-to-surface contact in the prior art. Therefore, in a car movement at a high speed, by reducing the frictions in the course of the blades and the linkage rod rotation, the load on the actuator is effectively reduced, the torque is reduced, thereby enabling the actuator to work more efficiently and longer.

In addition, the convex ring 22 can also be arranged on the bumper grille blade on the contacting plane with the pin connection unit, which also forms a line-to-surface contact reducing frictions.

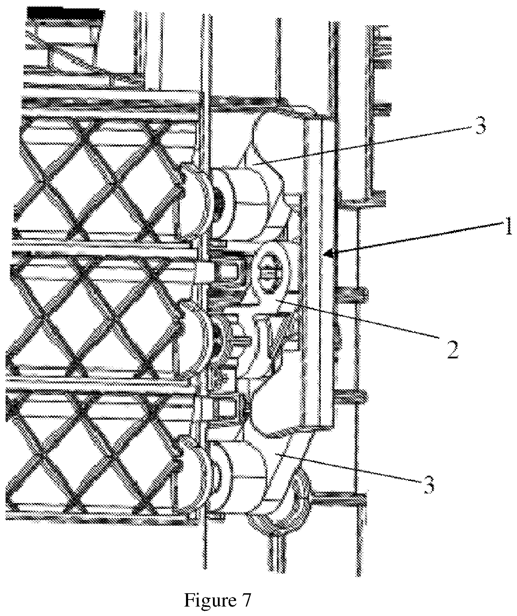

Figs. 6 and 7 show schematic views of the structure according to the invention in combination with the bumper grille blades, in which the holes 31 of three adjacent blades 3 pass through sequentially the corresponding pins 21 on the linkage structure, forming a stable and flexible pin-jointed structure.

When the pin connection units 2 are configured in a group of three, preferably, they are disposed as described above in the alternate staggered arrangement along the longitudinal direction of the linkage rod, i.e., they are arranged such that two adjacent pins have opposite insertion directions. However, the pin connection units 2 can also be distributed non-uniformly on the two sides of the linkage rod. For example, the insertion directions of two adjacent pin connection units to the blades are the same, while that of the third one is in the opposite direction. Or, when a group consists of four or five pin connection units 2, three of them are in the same insertion direction, while another one or two are in the opposite direction. This arrangement also constitutes an action force and a reaction force with respect to the linkage rod, so as to control the blades' turbulence along the Y direction, to ensure stable rotation, and to improve the parallelism between the blades, and thereby reducing loosening.

What has been described above are merely preferred embodiments of the invention, and is not to limit the scope of the invention. The embodiments of the invention described above can be subject to various modifications based on the contents of the claims.

## Claims

1. A bumper grille including blades (3) and a blade linkage structure, the blade linkage structure comprising a linkage rod (1), a set of pin connection units (2) being provided on the linkage rod (1), the pin connection units (2) being configured to engage with the blades (3) of the bumper grille, **characterized in that**, the pin connection units (2) are alternatively arranged on both sides of the linkage rod (1) along the longitudinal direction of the linkage rod such that the pin connection units (2) have opposite insertion directions with adjacent blades (3).

2. The bumper grille according to claim 1, wherein the pin connection units (2) are alternatively distributed on both sides of the linkage rod (1) in a staggered arrangement along the longitudinal direction of the linkage rod (1).

3. The bumper grille according to claim 1 or 2, wherein the pin connection unit (2) comprises a pin (21), and the blade (3) of the bumper grille is provided with a pin orifice (31), the pin (21) and the pin orifice (31) engaging with each other by insertion fit.

4. The bumper grille according to claim 3, wherein the pin connection unit (2) is provided with a convex ring (22) at the bottom surrounding the pin (21).

5. The bumper grille according to claim 3 or 4, wherein the blade (3) of the bumper grille is provided with a convex ring on the contacting plane with the pin connection unit (2).

## Patentansprüche

1. Stoßstangengitter mit Lamellen (3) und einer Lamellenverbindungsstruktur, wobei die Lamellenverbindungsstruktur eine Verbindungsstange (1) und einen Satz von Stiftverbindungseinheiten (2) aufweist, die an der Verbindungsstange (1) vorgesehen sind, wobei die Stiftverbindungseinheiten (2) so ausgebildet sind, dass sie in die Lamellen (3) des Stoßstangengitters eingreifen, **dadurch gekennzeichnet, dass** die Stiftverbindungseinheiten (2) abwechselnd auf beiden Seiten der Verbindungsstange (1) entlang der Längsrichtung des Stoßstangengitters angeordnet sind, so dass die Stiftverbindungseinheiten (2) entgegengesetzte Einführungsrichtungen mit benachbarten Lamellen (3) haben.

2. Stoßstangengrill nach Anspruch 1, wobei die Stiftverbindungseinheiten (2) alternativ auf beiden Seiten der Verbindungsstange (1) in Längsrichtung der Verbindungsstange (1) versetzt angeordnet sind.

3. Stoßstangengitter nach Anspruch 1 oder 2, wobei die Stiftverbindungseinheit (2) einen Stift (21) aufweist und die Lamelle (3) des Stoßstangengitters mit einer Stiftanordnung (31) versehen ist, wobei der Stift (21) und die Stiftanordnung (31) durch Einstecken ineinander eingreifen.

4. Stoßstangengitter nach Anspruch 3, wobei die Stiftverbindungseinheit (2) mit einem konvexen Ring (22) an der Unterseite versehen ist, der den Stift (21) umgibt.

5. Stoßstangengitter nach Anspruch 3 oder 4, wobei die Lamelle (3) des Stoßstangengitters in der Berührungsebene mit der Stiftverbindungseinheit (2) mit einem konvexen Ring versehen ist.

## Revendications

1. Une grille de pare-chocs comprenant des lames (3) et une structure de liaison de lame, la structure de liaison de lame comprenant une tige de liaison (1), un ensemble d'unités de connexion à goupille (2) étant disposées sur la tige de liaison (1), les unités de connexion à goupille (2) étant configurées pour s'engager avec les lames (3) de la grille de pare-chocs, **caractérisée en ce que** les unités de connexion à goupille (2) sont disposées alternativement des deux côtés de la tige de liaison (1) dans le sens longitudinal de la tige de liaison de telle sorte que les unités de connexion à goupille (2) ont des directions d'insertion opposées avec des lames adjacentes (3).

2. Grille de pare-chocs selon la revendication 1, dans laquelle les unités de connexion à goupille (2) sont alternativement réparties des deux côtés de la tige de liaison (1) en quinconce le long de la direction longitudinale de la tige de liaison (1).

3. Grille de pare-chocs selon la revendication 1 ou 2, dans laquelle l'unité de connexion à goupille (2) comprend une goupille (21), et la lame (3) de la grille de pare-chocs est pourvue d'un orifice de goupille (31), la goupille (21) et l'orifice de goupille (31) s'engageant l'un dans l'autre par ajustement d'insertion.

4. Grille de pare-chocs selon la revendication 3, dans laquelle l'unité de connexion à goupille (2) est pourvue d'un anneau convexe (22) en bas entourant la goupille (21).

5. Grille de pare-chocs selon la revendication 3 ou 4, dans laquelle la lame (3) de la grille de pare-chocs est pourvue d'un anneau convexe sur le plan de contact avec l'unité de connexion à goupille (2).
